# EUROPÄISCHE PATENTSCHRIFT

(11) **EP 0 726 190 B1**
(45) Veröffentlichungstag und Bekanntmachung des Hinweises auf die Patenterteilung: **29.07.1998**
(21) Anmeldenummer: 95120563.2
(22) Anmeldetag: 27.12.1995
(51) Int. Cl.: B60T 15/36, B60T 13/66

(54) **Druckmittelbetätigte Fahrzeugbremsanlage**
Pressure-operated vehicle brake installation
Installation de freinage actionnée par pression pour véhicules

(30) Priorität: 10.02.1995 DE 19504393
(43) Veröffentlichungstag der Anmeldung: 14.08.1996
(73) Patentinhaber: WABCO GmbH, 30453 Hannover (DE); DAIMLER-BENZ AKTIENGESELLSCHAFT, 70567 Stuttgart (DE)
(72) Erfinder: Kiel, Bernd, D-31515 Wunstorf (DE); Unser, Karl-Heinz, D-76461 Muggensturm (DE)
(74) Vertreter: Schrödter, Manfred, Dipl.-Ing.

(56) Entgegenhaltungen:
- EP-A- 0 079 543
- DE-A- 2 738 948
- DE-A- 3 230 970

## Beschreibung

Die Erfindung betrifft eine druckmittelbetätigte Fahrzeugbremsanlage gemäß dem Oberbegriff des Patentanspruchs 1.

Eine derartige Fahrzeugbremsanlage ist aus der EP-A 0 079 543 bekannt.

Bei dieser bekannten, als Zweikreisbremsanlage ausgebildeten Fahrzeugbremsanlage ist sowohl den Bremszylindern der Vorderachse als auch den Bremszylindern der Hinterachse zur Steuerung des Bremsdruckes je eine Relaisventileinrichtung zugeordnet.

Durch die Aufteilung der Bremsanlage in zwei Bremskreise ist sichergestellt, daß bei Ausfall des einen Bremskreises die dem jeweils anderen Bremskreis zugeordneten Bremszylinder noch mit Druckmittel versorgt werden, so daß das Fahrzeug relativ sicher verzögert werden kann.

Bei Ausfall des als Hinterachsbremskreises dienenden Bremskreises wird noch eine gute Verzögerung des Fahrzeugs erzielt, da bedingt durch die dynamische Achslastverlagerung bei einem Bremsvorgang in etwa 70 bis 80 % der Bremskraft von den Rädern der Vorderachse des Fahrzeugs aufgebracht werden.

Fällt jedoch der den Rädern der Vorderachse des Fahrzeugs zugeordnete Bremskreis aus, kann das Erreichen der vom Gesetzgeber vorgeschriebenen, von den Rädern der Hinterachse des Fahrzeugs aufzubringenden Bremskraft problematisch werden. Dies ist ins besondere dann der Fall, wenn es sich um ein Fahrzeug mit einem sehr niedrigen Leergewicht und einem hohen zulässigen Gesamtgewicht handelt, da die Räder der Hinterachse des unbeladenen Fahrzeugs unter ungünstigen Umständen nicht mit der eine gute Verzögerung des Fahrzeugs gewährleistenden Kraft in Richtung auf die Fahrbahn zu belastet werden.

Der Erfindung liegt deshalb die Aufgabe zugrunde, eine druckmittelbetätigte Fahrzeugbremsanlage der eingangs erwähnten Art zu schaffen, die so ausgebildet ist, daß auch unter ungünstigen Fahrbahn- und Gewichtsbedingungen für das Fahrzeug auch bei einem Defekt an einem Bremskreis des Fahrzeugs ein sicheres Verzögern des Fahrzeugs gewährleistet ist.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine Fahrzeugbremsanlage zu erhalten, bei welcher bei Auftreten eines Defektes an einem der beiden Bremskreise die Versorgung des einen der beiden dem defekten Bremskreis zugeordneten Bremszylinder mit Bremsdruck noch sichergestellt ist. Als Bremsdruck für diesen einen Bremszylinder des defekten Bremskreises kann der Druck des intakten Bremskreises oder auch der Druck einer von den beiden Bremskreisen des Fahrzeugs unabhängigen Druckmittelquelle dienen.

Zur Sicherstellung der Versorgung des einen der beiden Bremszylinder der einen Fahrzeugachse mit Bremsdruck bei einem Defekt in dem diese Bremszylinder aufweisenden Bremskreis ist zwischen dem einen Bremszylinder dieser Fahrzeugachse und einer zur Versorgung beider Bremszylinder dieser Fahrzeugachse dienenden Steuerventileinrichtung eine zusätzliche Steuerventileinrichtung angeordnet, über welche dieser Bremszylinder sowohl mit dem Druck der Druckmittelquelle des beiden Bremszylindern zugeordneten Bremskreises als auch mit dem Druck einer von der Druckmittelquelle dieses Bremskreises unabhängigen Druckmittelquelle beaufschlagbar ist.

Die zusätzliche Steuerventileinrichtung ist so in die druckmittelbetätigte Fahrzeugbremsanlage geschaltet, daß ihr normalerweise zur Atmosphäre hin führender Druckmittelauslaß mit dem Druckmittelausgang der zur Versorgung beider Bremszylinder des Bremskreises dienenden Steuerventileinrichtung und ihr Druckmitteleingang mit einer von der zur Versorgung beider Bremszylinder mit Druckmittel dienenden Druckmittelquelle unabhängigen Druckmittelquelle, z. B. der Druckmittelquelle eines als Anhänger-Bremskreis dienenden dritten Bremskreises des Fahrzeugs, verbunden ist.

Anhand der Zeichnung wird nachfolgend ein Ausführungsbeispiel der Erfindung näher erläutert.

Es zeigen:
- Fig. 1: schematisch eine druckmittelbetätigte Fahrzeugbremsanlage mit der erfindungsgemäßen Anordnung einer zusätzlichen Steuerventileinrichtung für einen Bremszylinder einer Fahrzeugachse und
- Fig. 2: die zusätzliche Steuerventileinrichtung im Schnitt.

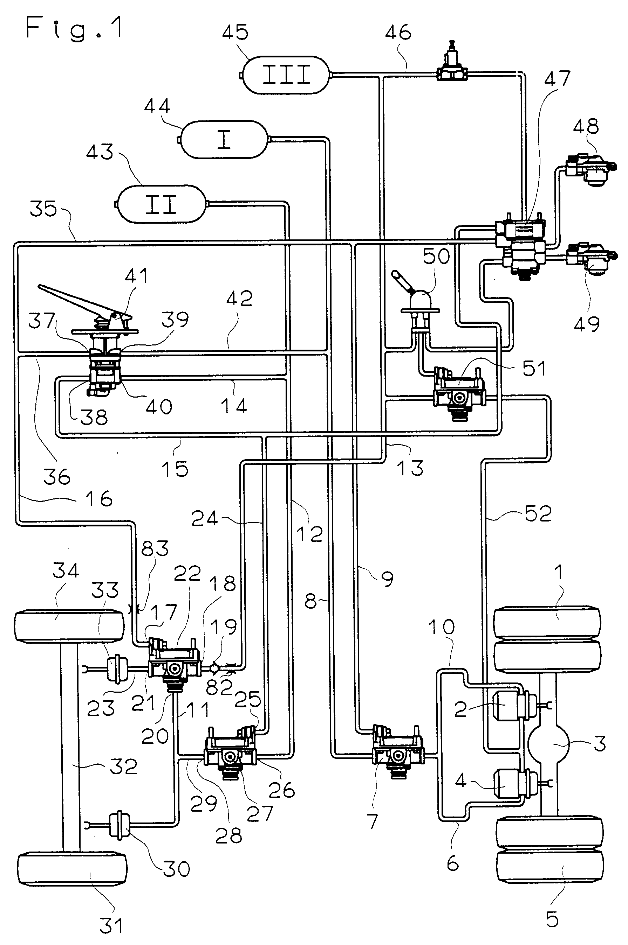

In Fig. 1 ist eine dreikreisige Bremsanlage für ein zweiachsiges Fahrzeug dargestellt, wobei der dritte Kreis zur Versorgung einer Anhänger-Bremsanlage dient.

Eine als Hinterachse (3) dienende erste Achse weist zwei Räder (1) und (5) auf. Jedem Rad (1) bzw. (5) ist ein als Federspeicher-Bremszylinder ausgebildeter Bremszylinder (2) und (4) zugeordnet. Die beiden Bremszylinder (2) und (4) sind über Druckmittelleitungen (6) und (10) an den Ausgang einer ersten Steuerventileinrichtung (7) angeschlossen. Der Eingang der ersten Steuerventileinrichtung (7) ist über eine Druckmittelleitung (8) mit einem als Druckmittelquelle zur Versorgung der Bremszylinder (2) und (4) mit Druckmittel dienenden Druckmittel-Vorratsbehälter (44) verbunden. Der Steuereingang der ersten Steuerventileinrichtung (7) steht über Druckmittelleitungen (9), (35) und (36) mit einem als Steuerausgang dienenden ersten Druckmittelausgang (37) eines als Motorwagen-Bremsventil (41) ausgebildeten Mehrkreis-Bremswertgebers in Verbindung. Ein dem ersten Druckmittelausgang (37) zugeordneter erster Druckmitteleingang (39) des Motorwagen-Bremsventils (41) ist über eine Druckmittelleitung (42) und die Druckmittelleitung (8) an den Druckmittel-Vorratsbehälter (44) angeschlossen. Die Bremszylinder (2) und (4) der Hinterachse (3) bilden zusammen mit den Druckmittelleitungen (6) und (10), der ersten Steuerventileinrichtung (7), den Druckmittelleitungen (8), (9), (35) und (36), dem Motorwagen-Bremsventil (41) und der Druckmittelleitung (42) sowie dem Druckmittel-Vorratsbehälter (44) einen als Hinterachsbremskreis dienenden ersten Bremskreis (I) der Fahrzeugbremsanlage.

Eine als Vorderachse (32) dienende zweite Achse des Fahrzeugs weist ein erstes Rad (34) und ein zweites Rad (31) auf. Dem ersten Rad (34) ist ein erster Bremszylinder (33) und dem zweiten Rad (31) ist ein zweiter Bremszylinder (30) zugeordnet. Der zweite Bremszylinder (30) ist über eine Druckmittelleitung (11) und eine mit dieser verbundene Druckmittelleitung (29) mit dem Druckmittelausgang (28) einer zweiten Steuerventileinrichtung (27) verbunden. Ein Druckmitteleingang (26) der zweiten Steuerventileinrichtung (27) ist über eine Druckmittelleitung (12) mit einem Druckmittel-Vorratsbehälter (43) verbunden, der als Druckmittelquelle zur Versorgung der Bremszylinder (33) und (30) der Vorderachse (32) des Fahrzeugs mit Druckmittel dient. Ein Steuereingang (25) der zweiten Steuerventileinrichtung (27) steht über eine Druckmittelleitung (24) und eine mit dieser verbundene Druckmittelleitung (15) mit einem als Steuerausgang dienenden zweiten Druckmittelausgang (38) des Motorwagen-Bremsventils (41) in Verbindung. Ein dem zweiten Druckmittelausgang (38) zugeordneter zweiter Druckmitteleingang (40) des Motorwagen-Bremsventils (41) ist über eine Druckmittelleitung (14) und die Druckmittelleitung (12) ebenfalls mit dem Druckmittel-Vorratsbehälter (43) verbunden.

Der erste Bremszylinder (33) der Vorderachse (32) ist über eine Druckmittelleitung (23) sowie eine zusätzliche Steuerventileinrichtung (22) und die Druckmittelleitung (11) mit dem Druckmittelausgang (28) der zweiten Steuerventileinrichtung (27) verbunden. Die zusätzliche Steuerventileinrichtung (22) besitzt einen Druckmitteleingang (18), einen Druckmittelausgang (21), einen Steuereingang (17) und einen normalerweise zu einer Druckmittelsenke hinführenden Druckmittelauslaß (20).

Über eine Druckmittelleitung (13) sowie eine mit dieser verbundene Druckmittelleitung (46) steht der Druckmitteleingang (18) der zusätzlichen Steuerventileinrichtung (22) mit einem Druckmittel-Vorratsbehälter (45) in Verbindung. An den Druckmittel-Vorratsbehälter (45) sind über die Druckmittelleitung (46) und eine Ventileinrichtung (47) zwei Kupplungsköpfe (48) und (49) angeschlossen, die zur Verbindung der Bremsanlage des Motorfahrzeugs mit der Bremsanlage eines Anhängerfahrzeugs dienen. Der Druckmittelauslaß (20) der zusätzlichen Steuerventileinrichtung (22) ist über die Druckmittelleitung (11) und die Druckmittelleitung (29) mit dem Druckmittelausgang (28) der zweiten Steuerventileinrichtung (27) verbunden. Der Druckmittelausgang (21) der zusätzlichen Steuerventileinrichtung (22) steht über die Druckmittelleitung (23) mit dem ersten Bremszylinder (33) der Vorderachse (32) in Verbindung. Der Steuereingang (17) der zusätzlichen Steuerventileinrichtung (22) steht über eine Druckmittelleitung (16) und die Druckmittelleitung (36) mit dem ersten Druckmittelausgang (37) des Motorwagen-Bremsventils (41) in Verbindung.

Über den Druckmitteleingang (18) ist die Druckmitteleingangskammer der zusätzliche Steuerventileinrichtung (22) mit dem Druckmittel-Vorratsbehälter (45) verbunden und über den Druckmittelauslaß (20) sowie die zweite Steuerventileinrichtung (27) ist die Druckmittelausgangskammer der zusätzlichen Steuerventileinrichtung (22) mit dem Druckmittel-Vorratsbehälter (43) verbindbar. In der Nähe des Druckmitteleingangs (18) der zusätzlichen Steuerventileinrichtung (22) sind in der vom Druckmitteleingang (18) zum Druckmittel-Vorratsbehälter (45) führenden Druckmittelleitung (13) eine Drossel (82) und ein vom Druckmittel des Druckmittel-Vorratsbehälter (45) in Richtung auf die Druckmitteleingangskammer der zusätzlichen Steuerventileinrichtung (22) zu in die Offenstellung bringbares Rückschlagventil (19) angeordnet. Das Rückschlagventil (19) dient zum Absichern des zur Versorgung der beiden Bremszylinder (33) und (30) mit Druckmittel dienenden Druckmittel-Vorratsbehälters (43) und des von diesem Druckmittel-Vorratsbehälter (43) unabhängigen Druckmittel-Vorratsbehälters (45) gegeneinander. Das Rückschlagventil (19) ist zwischen dem Druckmitteleingang (18) und der Drossel (82) angordnet. Eine weitere Drossel (83) ist in der vom ersten Druckmittelausgang (37) des Motorwagen-Bremsventils (41) zum Steuereingang (17) der zusätzlichen Steuerventileinrichtung (22) führenden Druckmittelleitung (16) in der Nähe des Steuereingangs (17) angordnet. Diese Drossel kann auch, z. B. als Blende ausgebildet, direkt im Steuereingang (17) angeordnet werden.

Die beiden Bremszylinder (33) und (30) der Vorderachse (32), die Druckmittelleitungen (23), (11) und (29), die zweite Steuerventileinrichtung (27) und die zusätzliche Steuerventileinrichtung (22) sowie die Druckmittelleitungen (24), (15), (16) und (36), das Motorwagen-Bremsventil (41), die Druckmittelleitung (14) und die Druckmittelleitung (12) sowie der Druckmittel-Vorratsbehälter (43) bilden einen als Vorderachsbremskreis dienenden zweiten Bremskreis (II) für die druckmittelbetätigte Fahrzeugbremsanlage.

Über eine Druckmittelleitung (52) stehen die Bremszylinder (2) und (4) der Hinterachse (3) des Fahrzeugs mit dem Druckmittelausgang eines mittels eines Handbremsventils (50) steuerbaren Ventils (51) in Verbindung, dessen Druckmitteleingang über die Druckmittelleitung (13) und die Druckmittelleitung (46) mit dem Druckmittel-Vorratsbehälter (45) verbunden ist. Das Handbremsventil (50) ist desweiteren mit einem Druckmitteleingang des als Anhänger-Steuerventil dienenden Ventils (47) verbunden. Die Ventileinrichtungen (47) und (50) und die Kupplungsköpfe (48, 49) sowie die zugehörigen Druckmittelleitungen und der Druckmittel-Vorratsbehälter (45) bilden einen als Anhänger-Bremskreis dienenden dritten Bremskreis (III) der Fahrzeugbremsanlage.

Die erste Steuerventileinrichtung (7), die zweite Steuerventileinrichtung (27) und die zusätzliche Steuerventileinrichtung (22) sind baugleich und vorzugsweise als handelsübliche Relaisventile ausgebildet, wobei lediglich die zusätzliche Steuerventileinrichtung (22) ein Rückschlagventil (19) und gegebenenfalls die Drosseln (83) und (82) aufweist.

Es wird nachstehend deshalb lediglich die zusätzliche Steuerventileinrichtung beschrieben.

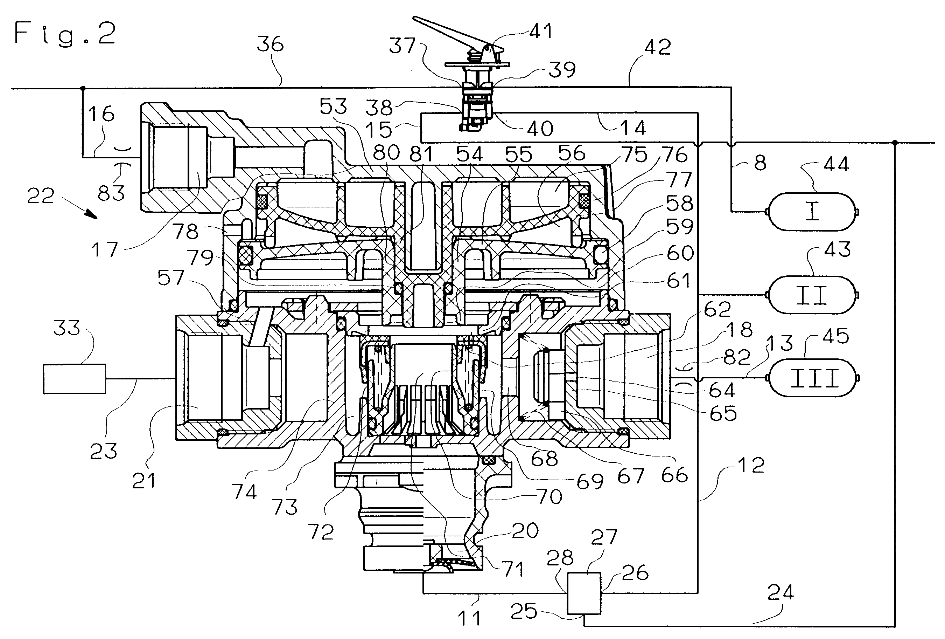

In Fig. 2 ist die dem ersten Bremszylinder (33) der Vorderachse (32) des Fahrzeugs zugeordnete zusätzliche Steuerventileinrichtung (22) im Schnitt dargestellt. Der besseren Übersicht halber sind die Druckmittelanschlüsse der zusätzlichen Steuerventileinrichtung (22) und die von den Druckmittelanschlüssen zu dem Druckmittel-Vorratsbehälter, dem Motorwagen-Bremsventil und der zweiten Steuerventileinrichtung (27) hinführenden Druckmittelleitungen mit den auch in Fig. 1 verwendeten Bezugsziffern versehen.

Die als Relaisventil (22) ausgebildete zusätzliche Steuerventileinrichtung weist einen als Steuerkolben dienenden ersten Relaiskolben (55) und einen als Steuerkolben dienenden zweiten Relaiskolben (77) auf, die hintereinanderliegend und koaxial zueinander in einem Gehäuse (53) angeordnet und in Richtung der Längsachse des Gehäuses (53) bewegbar sind. Der zweite Relaiskolben (77) weist eine kleinere von einem Druckmittel beaufschlagbare Wirkfläche als der erste Relaiskolben (55) auf. Der erste Relaiskolben (55) begrenzt mit seiner dem zweiten Relaiskolben (77) abgewandten Seite eine Druckmittelausgangskammer (59) und mit seiner dem zweiten Relaiskolben (77) zugewandten Seite einen Raum (56), der über eine Öffnung (78) in der Wand des Gehäuses (53) mit der Atmosphäre verbunden ist.

Der zweite Relaiskolben (77) begrenzt mit seiner dem ersten Relaiskolben (55) zugewandten Seite ebenfalls den Raum (56) und mit seiner dem ersten Relaiskolben (55) abgewandten Seite eine Steuerkammer (75). Der erste Relaiskolben (55) trägt auf seinem Umfang einen Dichtring (58), der dichtend an der Wand des Gehäuses (53) anliegt. Desgleichen trägt der zweite Relaiskolben (77) auf seinem Umfang einen Dichtring (76), welcher ebenfalls dichtend an der Wand des Gehäuses (53) anliegt. Die Dichtringe (58) und (76) sowie die Öffnung (78) verhindern, daß ein Austausch von Druckmittel zwischen der Steuerkammer (75) und der Druckmittelausgangskammer (59) stattfindet.

Der zweite Relaiskolben (77) weist einen zentrisch angeordneten, sich einerseits in Richtung auf die Steuerkammer (75) und andererseits in Richtung auf den ersten Relaiskolben (55) zu erstreckenden Fortsatz (81) auf. In dem sich auf die Steuerkammer (75) zu erstreckenden Bereich des Fortsatzes (81) ist zentrisch eine Sackbohrung angeordnet, in welche sich ein zapfenartiger Vorsprung des Gehäuses (53) hineinerstreckt. Der zweite Relaiskolben (77) ist so auf diesem zapfenartigen Vorsprung des Gehäuses (53) gleitend gelagert.

Ebenso weist der erste Relaiskolben (55) einen zentrsich angeordneten, sich in Richtung auf die Druckmittelausgangskammer (59) zu erstreckenden Fortsatz (54) auf, der eine zentrisch angeordnete abgestufte Bohrung (80) besitzt. In die Bohrung (80) erstreckt sich der dem ersten Relaiskolben (55) zugewandte, ebenfalls abgestufte Bereich des Fortsatzes (81) des zweiten Relaiskolbens (77) hinein. Der erste Relaiskolben (55) ist auf dem abgestuften Bereich des Fortsatzes (81) des zweiten Relaiskolbens (77) gleitend geführt. Zwischen den einander zugewandten Seiten der Stufe des abgestuften Bereiches des Fortsatzes (81) des zweiten Relaiskolbens (77) und der Stufe der im Fortsatz (54) des ersten Relaiskolbens (55) angeordneten Bohrung (80) ist ein Dichtring (79) angeordnet, welcher verhindert, daß über den Spalt zwischen der äußeren Mantelfläche des Fortsatzes (81) und der die Bohrung (80) begrenzenden Wand des Fortsatzes (54) Druckmittel von der Druckmittelausgangskammer (59) in den Raum (56) gelangt und über die Öffnung (78) in die Atmosphäre entweicht. Mittels des ersten Relaiskolbens (55) und des zweiten Relaiskolbens (77) wird ein kombiniertes Einlaß- und Auslaßventil (61, 62, 60), über welches die Druckmittelausgangskammer (59) in Abhängigkeit von der Stellung des ersten Relaiskolbens (55) und des zweiten Relaiskolbens (77) mit einer Druckmitteleingangskammer (73) oder mit einem Druckmittelauslaß (71, 20) verbindbar ist, betätigt. Der Druckmittelauslaß (71, 20) hat bei der in Fig. 1 gezeigten Anordnung des Relaisventils (22) in einer Bremsanlage die Funktion sowohl eines Druckmittelauslasses als auch eines Druckmitteleingangs.

Das kombinierte Einlaß- und Auslaßventil (60, 61, 62) besteht aus einem im Gehäuse (53) ortsfest angeordneten ringförmigen Einlaßventilsitz (61) und einem relativ zu diesem bewegbar angeordneten ringförmigen Ventilglied (62), welches durch die Kraft einer Feder (72) am Einlaßventilsitz (61) gehalten wird, und einem Auslaßventilsitz (60), der von dem freien Ende des zentrisch am ersten Relaiskolben (55) angeordneten Fortsatzes (54) gebildet wird. Der Fortsatz (54) ist koaxial zum Einlaßventilsitz (61) und zum Ventilglied (62) am ersten Relaiskolben (55) angeordnet und erstreckt sich mit seinem den Auslaßventilsitz (60) bildenden freien Endbereich in Richtung auf den Einlaßventilsitz (61) und das Ventilglied (62) zu. Auf der dem Auslaßventilsitz (60) abgewandten Seite des Ventilgliedes (62) ist koaxial zum Ventilglied (62) im Gehäuse ein sich in Richtung auf das Ventilglied (62) zu erstreckender rohrförmiger Körper angeordnet, der auf seiner dem Ventilglied zugewandten Seite gabelförmig ausgebildet ist. Der gabelförmige Bereich des rohrförmigen Körpers weist einen äußeren Schenkel (69) und einen inneren Schenkel (70) auf, die parallel zur Längsachse des Gehäuses (53) verlaufen.

Das Ventilglied (62) ist als ein U-förmiger Körper ausgebildet, der so zu dem gabelförmigen Bereich des rohrförmigen Körpers angeordnet ist, daß der innere Schenkel des Ventilgliedes (62) auf der äußeren Mantelfläche des inneren Schenkels (70) und der äußere Schenkel des Ventilgliedes (62) auf der äußeren Mantelfläche des äußeren Schenkels (69) des gabelförmigen Bereiches des rohrförmigen Körpers abgedichtet gleitend geführt wird. Die Feder (72) stützt sich mit ihrem einen Ende am Boden des gabelförmigen Bereiches des rohrförmigen Körpers ab und liegt mit ihrem anderen Ende auf dem Boden des U-förmig ausgebildeten Ventilgliedes (62) auf. Von dem freien Innenraum des rohrförmigen Körpers wird der im Gehäuse (53) gelegene Bereich (71) des Druckmittelauslasses (71, 20) gebildet, der mit einem außerhalb des Gehäuses (53) gelegenen, als Druckmittelanschluß dienenden Bereich (20) des Druckmittelauslasses (71, 20) in Verbindung steht.

Die Druckmitteleingangskammer (73) wird von der äußeren Mantelfläche des die beiden Schenkel (69) und (70) aufweisenden rohrförmigen Körpers und von einer ringförmigen Wand (74) des Gehäuses (53) begrenzt. In der Wand (74) ist ein Durchlaß (68) angeordnet, welcher die Druckmitteleingangskammer (73) mit einem Druckmitteleingang (18) verbindet. Der Druckmittelauslaß (71, 20) ist über das Auslaßventil (62, 60) des kombinierten Einlaß- und Auslaßventils (60, 61, 62) mit der Druckmittelausgangskammer (59) verbindbar.

Der Druckmitteleingang (18) ist topfförmig ausgebildet, wobei im Boden (65) des topfförmigen Teiles ein Durchlaß (64) vorgesehen ist. Zwischen der dem topfförmigen Teil des Druckmitteleingangs (18) zugewandten Seite der Wand (74) des Gehäuses (53) und dem Boden (65) des topfförmigen Teiles des Druckmitteleingangs (18) ist ein Ventilglied (66) angeordnet, welches von einer sich an der Wand (74) abstützenden Feder (67) so auf dem Boden (65) des topfförmigen Teiles des Druckmitteleingangs (18) gehalten wird, daß es den Durchlaß (64) verschließt. Der Druckmitteleingang (18) ist über eine Druckmittelleitung (13) mit einem Druckmittel-Vorratsbehälter (45) verbunden. Der Boden (65), der Durchlaß (64) und das Ventilglied (66) bilden ein vom Druckmittel des Druckmittel-Vorratsbehälters (45) in Richtung auf die Druckmitteleingangskammer (73) zu in die Offenstellung bringbares Rückschlagventil (65, 64, 66). In der Nähe des Druckmitteleingangs (18) ist in der Druckmittelleitung (13) eine Drossel (82) angeordnet. Die Drossel (82) kann auch, z. B. als Blende ausgebildet, direkt im Druckmitteleingang (18) angeordnet werden.

Die Druckmittelausgangskammer (59) ist über einen Durchlaß (57), der in einer einen Druckmittelausgang (21) von der Druckmittelausgangskammer (59) trennenden Wand des Gehäuses (53) angeordnet ist, mit dem Druckmittelausgang (21) verbunden. Der Druckmittelausgang (21) steht über eine Druckmittelleitung (23) mit dem ersten Bremszylinder (33) der Vorderachse des Fahrzeugs in Verbindung.

Der mit der Druckmittelausgangskammer (59) über das Auslaßventil (62, 60) verbindbare Druckmittelauslaß (20, 71) des Relaisventils (22) steht über eine Druckmittelleitung (11) mit einem Druckmittelausgang (28) einer zweiten Steuerventileinrichtung (27) in Verbindung. Ein Druckmitteleingang (26) der zweiten Steuerventileinrichtung (27) ist über eine Druckmittelleitung (12) mit einem Druckmittel-Vorratsbehälter (43) verbunden. Ein Steuereingang (25) der zweiten Steuerventileinrichtung (27) steht über Druckmittelleitungen (24) und (15) mit einem zweiten Druckmittelausgang (38) eines Motorwagen-Bremsventils (41) in Verbindung. Ein mit dem zweiten Druckmittelausgang (38) verbindbarer zweiter Druckmitteleingang (40) des Motorwagen-Bremsventils (41) ist über eine Druckmittelleitung (14) mit dem Druckmittel-Vorratsbehälter (43) verbunden. Die Steuerkammer (75) des Relaisventils (22) ist mit einem Steuereingang (17) verbunden, der über eine Druckmittelleitung (16) und eine mit dieser verbundene Druckmittelleitung (36) an einen ersten Druckmittelausgang (37) des Motorwagen-Bremsventils (41) angeschlossen ist. In der Nähe des Steuereingangs (17) ist in der Druckmittelleitung (16) eine Drossel (83) angeordnet. Die Drossel (83) kann, z. B. auch als Blende ausgebildet, direkt im Steuereingang (17) angeordnet werden. Ein mit dem ersten Druckmittelausgang (37) verbindbarer erster Druckmitteleingang (39) des Motorwagen-Bremsventils (41) steht über eine mit diesem verbundene Druckmittelleitung (42) und eine Druckmittelleitung (8) mit einem weiteren Druckmittel-Vorratsbehälter (44) in Verbindung.

Die Steuerkammer (75) des Relaisventils (22) ist somit mit dem vom Motorwagen-Bremsventil (41) über dessen ersten Druckmittelausgang (37) ausgesteuerten, als Steuersignal für den ersten Bremskreis (I) (Hinterachs-Bremskreis) dienenden Druck beaufschlagbar. Die Druckmittelausgangskammer (59) ist über das geöffnete Auslaßventil (60, 62) - bei geschlossenem Einlaßventil (61, 62) - des kombinierten Einlaß- und Auslaßventils (60, 61, 62) sowie den Druckmittelauslaß (20, 71) des Relaisventils (22) und die zweite Steuerventileinrichtung (27) mit dem Druck des dem zweiten Bremskreis (II) (Vorderachs-Bremskreis) zugeordneten Druckmittel-Vorratsbehälters (43) und über das geöffnete Einlaßventil (61, 62) - bei geschlossenem Auslaßventil (60, 62) - des kombinierten Einlaß- und Auslaßventils (60, 61, 62) sowie die Druckmitteleingangskammer (73) und den Druckmitteleingang (18) des Relaisventils (22) mit dem Druck des vom Druckmittel-Vorratsbehälter (43) für den vom zweiten Bremskreis (II) unabhängigen Druckmittel-Vorratsbehälters (45) für den dritten Bremskreis (III) (Anhänger-Bremskreis) beaufschlagbar. Der Druckabbau in der Druckmittelausgangskammer (59) des Relaisventils (22) und somit auch der Druckabbau in dem mit dieser verbundenen ersten Bremszylinder (33) erfolgt über das geöffnete Auslaßventil (60, 62) - bei geschlossenem Einlaßventil (61, 62) - des kombinierten Einlaß- und Auslaßventils (60, 61, 62) und den Druckmittelauslaß (71, 20) des Relaisventils (22) sowie die zweite Steuerventileinrichtung (27).

Die Funktion des vorstehend beschriebenen Relaisventils in der druckmittelbetätigten Fahrzeugbremsanlage wird im Rahmen der Funktion der gesamten Fahrzeugbremsanlage nachfolgend näher erläutert.

Bei nicht betätigtem Motorwagen-Bremsventil (41) befindet sich die als Relaisventil ausgebildete zusätzliche Steuerventileinrichtung (22) in der dargestellten Schaltstellung. Das Einlaßventil (61, 62) ist geschlossen und das Auslaßventil (62, 60) ist geöffnet. Die Steuerkammer (75) ist drucklos. In der Druckmitteleingangskammer (73) steht Druckmittel aus dem Druckmittel-Vorratsbehälter (45) des dritten Bremskreises (III) an. Die Druckmittelausgangskammer (59) ist mittels des Einlaßventils (61, 62) gegen die Druckmitteleingangskammer (73) abgesperrt und über das Auslaßventil (62, 60), den Druckmittelauslaß (71, 20), die Druckmittelleitung (11) und das geöffnete Auslaßventil der zweiten Steuerventileinrichtung (27) mit der Druckmittelsenke (Atmosphäre) verbunden. Der mit dem Druckmittelausgang (21) der zusätzlichen Steuerventileinrichtung (22) verbundene erste Bremszylinder (33) und der über die Druckmittelleitungen (11) und (29) mit dem Druckmittelausgang (28) der zweiten Steuerventileinrichtung (27) verbundene zweite Bremszylinder (30) der Vorderachse (32) sind somit ebenfalls über das Auslaßventil der zweiten Steuerventileinrichtung (27) mit der Druckmittelsenke (Atmosphäre) verbunden. Am Druckmitteleingang (26) der zweiten Steuerventileinrichtung (27) steht Druckmittel aus dem Druckmittel-Vorratsbehälter (43) des zweiten Bremskreises (II) an. Der Druckmitteleingang (26) und der Druckmittelausgang (28) der zweiten Steuerventileinrichtung (27) sind mittels des sich in der Schließstellung befindlichen Einlaßventils der zweiten Steuerventileinrichtung (27) gegeneinander abgesperrt.

Desgleichen steht in der Druckmitteleingangskammer der ersten Steuerventileinrichtung (7) Druckmittel aus dem Druckmittel-Vorratsbehälter (44) des ersten Bremskreises (Hinterachs-Bremskreis) an. Die Druckmittelausgangskammer und die Druckmitteleingangskammer sind mittels eines Einlaßventils der ersten Steuerventileinrichtung (7) gegeneinander abgesperrt und die Druckmittelausgangskammer ist über ein Auslaßventil der ersten Steuerventileinrichtung (7) mit der Druckmittelsenke (Atmosphäre) verbunden. Somit stehen auch die mit dem Druckmittelausgang der ersten Steuerventileinrichtung (7) verbundenen Bremszylinder (2) und (4) der Hinterachse (3) mit der Druckmittelsenke (Atmosphäre) in Verbindung. Die Steuerkammer der ersten Steuerventileinrichtung (7) ist drucklos. Am ersten Druckmitteleingang (39) des Motorwagen-BremsventilS (41) steht Druckmittel aus dem Druckmittel-Vorratsbehälter (44) des ersten Bremskreises (I) und am zweiten Druckmitteleingang (40) des Motorwagen-Bremsventils (41) steht Druckmittel aus dem Druckmittel-Vorratsbehälter (43) des zweiten Bremskreises (II) an. Die beiden als Steuerausgänge dienenden Druckmittelausgänge (37) und (38) des Motorwagen-Bremsventils (41) sind gegen die ihnen zugeordneten Druckmitteleingänge (39) und (40) mittels Ventileinrichtungen des Motorwagen-Bremsventils (41) abgesperrt.

Wird das Motorwagen-Bremsventil (41) zwecks Einleitens eines Bremsvorgangs betätigt, so werden die Ventileinrichtungen des Motorwagen-Bremsventils (41) in der Weise umgeschaltet, daß die Druckmittelausgänge (37) und (38) des Motorwagen-Bremsventils (41) mit den ihnen zugeordneten Druckmitteleingängen (39) und (40) des Motorwagen-Bremsventils (41) verbunden werden.

Vom Motorwagen-Bremsventil (41) wird über dessen ersten Druckmittelausgang (37) als Steuersignal für den ersten Bremskreis (I) dienender Steuerdruck in die Steuerkammer der ersten Steuerventileinrichtung 7) und in die Steuerkammer (75) der zusätzlichen Steuerventileinrichtung (22) eingesteuert.

Gleichzeitig gelangt vom zweiten Druckmittelausgang (38) des Motorwagen-Bremsventils (41) als Steuersignal für den zweiten Bremskreis (II) dienender Steuerdruck in die Steuerkammer der zweiten Steuerventileinrichtung (27). Die erste Steuerventileinrichtung (7) und die zweite Steuerventileinrichtung (27) schalten in der Weise um, daß die Druckmittelausgangskammer der ersten Steuerventileinrichtung (7) gegen die Druckmittelsenke abgesperrt und mit der ihr zugeordneten Druckmitteleingangskammer verbunden wird und ebenso die Druckmittelausgangskammer der zweiten Steuerventileinrichtung (27) gegen die Druckmittelsenke abgesperrt und mit der ihr zugeordneten Druckmitteleingangskammer verbunden wird.

Die Bremszylinder (2) und (4) der Hinterachse (3) werden dann mit dem von der ersten Steuerventileinrichtung (7) ausgesteuerten, vom Steuerdruck für den ersten Bremskreis (I) abhängigen Druck beaufschlagt, bis die erste Steuerventileinrichtung (7) eine Abschlußstellung erreicht hat (Einlaß- und Auslaßventil geschlossen).

Über die Druckmittelleitungen (29) und (11) gelangt von der zweiten Steuerventileinrichtung (27) ausgesteuerter, vom Steuerdruck für den zweiten Bremskreis (II) abhängiger Druck direkt in den zweiten Bremszylinder (30) der Vorderachse (32) und über den als zusätzlicher Druckmitteleingang dienenden Druckmittelauslaß (71, 20), das geöffnete Auslaßventil (60, 62), die Druckmittelausgangskammer (59), den Kanal (57) und den Druckmittelausgang (21) der zusätzlichen Steuerventileinrichtung (22) sowie die Druckmittelleitung (23) in den ersten Bremszylinder (33) der Vorderachse (32). In die beiden Bremszylinder (33) und (30) wird von der zweiten Steuerventileinrichtung (27) so lange Druck eingesteuert, bis die zweite Steuerventileinrichtung (27) eine Abschlußstellung erreicht hat (Einlaß- und Auslaßventil geschlossen).

Die Druckmitteleingangskammer (73) und die Druckmittelausgangskammer (59) der zusätzlichen Steuerventileinrichtung (22) sind bei intaktem zweiten Bremskreis (II) mittels des geschlossenen Einlaßventils (61, 62) der zusätzlichen Steuerventileinrichtung (22) immer gegeneinander abgesperrt.

Da die vom Steuerdruck in der Steuerkammer (75) beaufschlagte Wirkfläche des zweiten Relaiskolbens (77) der zusätzlichen Steuerventileinrichtung (22) kleiner ist als die entgegengerichtet vom Druck in der Druckmittelausgangskammer (59) beaufschlagte Wirkfläche des ersten Relaiskolbens (55), kann die vom Steuerdruck auf den zweiten Relaiskolben (77) ausgeübte Kraft die dieser Kraft entgegengerichtet auf den ersten Relaiskolben (55) ausgeübte Kraft des Druckes in der Druckmittelausgangskammer (59) nicht überwinden, so daß der am ersten Relaiskolben (55) anliegende zweite Relaiskolben (77) den ersten Relaiskolben (55) nicht in Richtung auf das kombinierte Einlaß- und Auslaßventil (60, 61, 62) zu verschieben kann. Eine Betätigung des kombinierten Einlaß- und Auslaßventils (60, 61, 62) mittels der beiden Relaiskolben (55) und (77) ist bei Vorhandensein von durch den Druckmittelauslaß (71, 20) in die Druckmittelausgangskammer (59) eingesteuertem Druck nicht möglich. Das Auslaßventil (60, 62) bleibt geöffnet und das Einlaßventil (61, 62) bleibt geschlossen. Der Steuerdruck für den ersten Bremskreis (I) und auch der in der Druckmitteleingangskammer (73) der zusätzlichen Steuerventileinrichtung (22) anstehende Druck aus dem Druckmittel-Vorratsbehälter (45) des dritten Bremskreises (III) (Anhänger-Bremskreis) haben bei intaktem zweiten Bremskreis (II) (Vorderachs-Bremskreis) keinen Einfluß auf den Druckaufbau oder Druckabbau im ersten Bremszylinder (33) der Vorderachse (32). Da der Druckaufbau in der Steuerkammer (75) der zusätzlichen Steuerventileinrichtung (22), bedingt durch die Drossel (83), langsamer erfolgt als der Druckaufbau in der Druckmittelausgangskammer (59) der zusätzlichen Steuerventileinrichtung (22), kann es auch zu Beginn der Druckeinsteuerung nicht zu einer ungewollten Betätigung des kombinierten Einlaß- und Auslaßventils (60, 61, 62) mittels der Relaiskolben (55) und (77) kommen. Durch die Anordnung der Drossel (82) vor dem Druckmitteleingang (18) wird erreicht, daß der Druckaufbau in der Druckmitteleingangskammer (73) der zusätzlichen Steuerventileinrichtung (22) vorrangig mit dem über den anderen Druckmitteleingang (20) eingesteuerten Druck des zweiten Bremskreises (II) erfolgt.

Soll der Bremsvorgang beendet werden, so wird das Motorwagen-Bremsventil (41) in seine Ausgangsstellung zurückgebracht. Die Verbindung zwischen dem Druckmittel-Vorratsbehälter (44) des ersten Bremskreises (I) und der Steuerkammer (75) der zusätzlichen Steuerventileinrichtung (22) und die Verbindung zwischen dem Druckmittel-Vorratsbehälter (44) des ersten Bremskreises (I) und der Steuerkammer der ersten Steuerventileinrichtung (7) sowie die Verbindung zwischen dem Druckmittel-Vorratsbehälter (43) des zweiten Bremskreises (II) und der Steuerkammer der zweiten Steuerventileinrichtung (27) wird unterbrochen. Sowohl die Steuerkammer (75) der zusätzlichen Steuerventileinrichtung (22) als auch die Steuerkammer der zweiten Steuerventileinrichtung (27) und die Steuerkammer der ersten Steuerventileinrichtung (7) werden über das Motorwagen-Bremsventil (41) zur Atmosphäre hin entlüftet. Durch den dann in den Steuerkammern der Steuerventileinrichtungen erfolgenden Druckabbau gelangen das Auslaßventil der ersten Steuerventileinrichtung (7) und das Auslaßventil der zweiten Steuerventileinrichtung (27) in ihre Offenstellung. Die Druckmittelausgangskammer (59) der zusätzlichen Steuerventileinrichtung (22) und somit auch der erste Bremszylinder (33) der Vorderachse (32) werden über das geöffnete Auslaßventil (60, 62) und den Druckmittelauslaß (71, 20) der zusätzlichen Steuerventileinrichtung (22) und das geöffnete Auslaßventil der mit der zusätzlichen Steuerventileinrichtung (22) verbundenen zweiten Steuerventileinrichtung (27) zur Atmosphäre hin entlüftet. Gleichzeitig wird der zweite Bremszylinder (30) der Vorderachse (32) über die zweite Steuerventileinrichtung (27) entlüftet. Die Bremszylinder (2) und (4) der Hinterachse (3) des Fahrzeugs werden über die erste Steuerventileinrichtung (7) entlüftet.

Tritt im zweiten Bremskreis (II) ein Defekt auf, z. B. Bruch einer der Druckmittelleitungen (15, 12, 29 oder 11), so kann entweder die zweite Steuerventileinrichtung (27) bei Betätigen des Motorwagen-Bremsventils (41) nicht mehr angesteuert werden oder Druckmittel aus dem Druckmittel-Vorratsbehälter (43) des zweiten Bremskreises (II) strömt über die zweite Steuerventileinrichtung (27) und die möglicherweise defekte Druckmittelleitung (11) zur Atmosphäre hin ab. Vom Druckmittel-Vorratsbehälter (43) des zweiten Bremskreises (II) kann in einem solchen Fall kein Druckmittel mehr in den zweiten Bremszylinder (30) der Vorderachse (32) und in die Druckmittelausgangskammer (59) der zusätzlichen Steuerventileinrichtung (22) gelangen.

Der sich beim Betätigen des Motorwagen-Bremsventils (41) in der Steuerkammer (75) der zusätzlichen Steuerventileinrichtung (22) aufbauende Druck (Steuersignal für den ersten Bremskreis (I)) schiebt den zweiten Relaiskolben (77) der zusätzlichen Steuerventileinrichtung (22) nach unten in Richtung auf das kombinierte Einlaß- und Auslaßventil (61, 60, 62) zu. Da der erste Relaiskolben (55) zwischen dem kombinierten Einlaß- und Auslaßentil (61, 60, 62) und dem zweiten Relaiskolben (77) angeordnet ist, wird der erste Relaiskolben (55) vom zweiten Relaiskolben (77) mitgenommen und in Richtung auf das kombinierte Einlaß- und Auslaßventil (61, 60, 62) zu verschoben. Der Auslaßventilsitz (60) des Auslaßventils (62) setzt auf das Ventilglied (62) auf. Das Auslaßventil (62, 60) ist dann geschlossen. Bei der weiteren Abwärtsbewegung der Relaiskolben (55) und (77) wird das Ventilglied (62) vom Einlaßventilsitz (61) abgehoben. Das Einlaßventil (61, 62) ist dann geöffnet. Aus der Druckmitteleingangskammer (73) strömt Druckmittel aus dem Druckmittel-Vorratsbehälter (45) des dritten Bremskreises (III) durch das geöffnete Einlaßventil (61, 62) in die Druckmittelausgangskammer (59) und von dieser weiter durch den Durchlaß (57) in den Druckmittelausgang (21). Von der zusätzlichen Steuerventileinrichtung (22) wird dann ein vom Druck am ersten Druckmittelausgang (37) des Motorwagen-Bremsventils (41) abhängiger Druck aus dem dritten Bremskreis (III) ausgesteuert. Vom Druckmittelausgang (21) gelangt das Druckmittel durch die Druckmittelleitung (23) zum ersten Bremszylinder (33) des Rades (34) der Vorderachse (32) des Fahrzeugs. Der sich in der Druckmittelausgangskammer (59) aufbauende Druck bewirkt eine Bewegung des ersten Relaiskolbens (55) und somit auch des zweiten Relaiskolbens (77) gegen die Kraft des Steuerdruckes in der Steuerkammer (75) in Richtung auf die Steuerkammer (75) zu. Bei Erreichen von Gleichheit zwischen der vom Steuerdruck in der Steuerkammer (75) auf den zweiten Relaiskolben (77) und über diesen auf den ersten Relaiskolben(55) ausgeübten Kraft und der vom Druck in der Druckmittelausgangskammer (59) auf den ersten Relaiskolben (55) und über diesen auf den zweiten Relaiskolben (77) dieser Kraft entgegengerichtet ausgeübten Kraft gelangt das Einlaßventil (61, 62) in die Schließstellung und eine Abschlußstellung ist erreicht.

Wird zwecks Beendigung des Bremsvorgangs das Motorwagen-Bremsventil (41) in seine Ausgangsstellung gebracht, so wird die Verbindung zwischen der Steuerkammer (75) der zusätzlichen Steuerventileinrichtung (22) und dem Druckmittel-Vorratsbehälter (44) des ersten Bremskreises (I) mittels des Motorwagen-Bremsventils (41) unterbrochen. Die Steuerkammer (75) wird über das Motorwagen-Bremsventil (41) zur Atmosphäre hin entlüftet. Durch die dabei auftretende Druckdifferenz zwischen dem Druck in der Steuerkammer (75) und dem Druck in der Druckmittelausgangskammer (59) werden die Relaiskolben (55) und (77) vom Druck in der Druckmittelausgangskammer (59) weiter in Richtung auf die Steuerkammer (75) zu verschoben. Dabei hebt der Auslaßventilsitz (60) des kombinierten Einlaß- und Auslaßventils (60, 61, 62) vom Ventilglied (62) ab. Das Auslaßventil (60, 62) ist dann geöffnet. Über das geöffnete Auslaßventil (60, 62) wird der Druck aus der Druckmittelausgangskammer (59) über den Druckmittelauslaß (71, 20) und das geöffnete Auslaßventil der zweiten Steuerventileinrichtung (27) oder eine mögliche Bruchstelle in der Druckmittelleitung (11) zur Atmosphäre hin abgebaut. Dabei wird auch der erste Bremszylinder (33) der Vorderachse (32) über die Druckmittelausgangskammer (59) der zusätzlichen Steuerventileinrichtung (22) entlüftet.

Durch die in Fig. 1 gezeigte Anordnung einer zusätzlichen Steuerventileinrichtung in einem der beiden Druckmittelleitungszweige einer Druckmittelleitung, die den Druckmittelausgang einer den Bremszylindern der Vorderachse eines Fahrzeugs zugeordneten Steuerventileinrichtung mit den beiden Bremszylindern der Vorderachse verbindet, ist sichergestellt, daß bei Ausfall des Vorderachsbremskreises (zweiter Bremskreis II) wenigstens ein Rad der Vorderachse des Fahrzeugs noch gebremst werden kann.

Die Ausbildung und Anordnung des im Druckmitteleingang der zusätzlichen Steuerventileinrichtung vorgesehenen Rückschlagventils ist nicht an dieses Ausführungsbeispiel gebunden. Von Bedeutung ist, daß bei Abfall des Druckes am Druckmitteleingang die Druckmitteleingangskammer der zusätzlichen Steuerventileinrichtung gegen diesen Druckmitteleingang abgesperrt wird.

In der Beschreibung ist erwähnt, daß die Bremszylinder über die zugeordneten Steuerventileinrichtungen mit einer Druckmittelquelle oder mit einer Druckmittelsenke verbindbar sind. Eingeschlossen in diese Aussage soll auch sein, daß in die von den Steuerventileinrichtungen zu den Bremszylindern führenden Druckmittelleitungen zusätzliche Regelventile, wie z. B. ABS-Regelventile, geschaltet sein können, die auch ein Auslaßventil aufweisen, über welches der zugeordnete Bremszylinder mit einer Druckmittelsenke verbunden werden kann. Als Druckmittelsenke wird für pneumatisch betätigte Anlagen die Atmosphäre angesehen. Bei einer hydraulischen Anlage wird die Druckmittelsenke z. B. als Sumpf bezeichnet. Bei der in dieser Patentanmeldung beanspruchten Druckmittelbetätigten Fahrzeugbremsanlage kann es sich sowohl um eine pneumatisch betätigte Fahrzeugbremsanlage als auch um eine hydraulische oder kombiniert hydraulisch-pneumatische Fahrzeugbremsanlage handeln.

Die zusätzliche Steuerventileinrichtung (22) kann zwei Relaiskolben (55) und (77) besitzen, deren vom Druckmittel beaufschlagte Wirkflächen unterschiedliche Größe haben, wie im Ausführungsbeispiel bschrieben. Es ist jedoch im Rahmen der Erfindung auch möglich, nur einen Relaiskolben vorzusehen und diesen als Stufenkolben auszubilden, wobei auf dem Umfang des den größeren Durchmesser aufweisenden Bereiches und auf dem Umfang des den kleineren Druchmesser aufweisenden Bereiches des Stufenkolbens je ein Dichtring anzuordnen ist. Der Stufenkolben muß dann so im Gehäuse der zusätzlichen Ventileinrichtung angeordnet sein, daß seine den kleineren Durchmesser aufweisende Seite die Steuerkammer begrenzt. Dadurch ist sichergestellt, daß der oder die Relaiskolben das kombinierte Einlaß- und Auslaßventil der zusätzlichen Steuerventileinrichtung nicht betätigen kann bzw. betätigen können, wenn gleichzeitig Steuerdruckmittel in der Steuerkammer und über den Druckmittelauslaß herangeführtes Druckmittel in der Druckmittelausgangskammer vorhanden ist. Wenn jedoch sichergestellt ist, daß der über den Druckmittelauslaß der Druckmittelausgangskammer zugeführte Druck nicht höher sein wird als der Druck in der Steuerkammer, können die vom Druckmittel beaufschlagten Wirkflächen des Relaiskolbens bzw. der Relaiskolben auch gleich groß bemessen sein. Um sicherzustellen, daß das Druckmittel in der Steuerkammer und das Druckmittel in der Druckmittelausgangskammer sich nicht vermischen können, müssen entweder zwei mit wenigstens je einem Dichtring versehene Relaiskolben oder ein Relaiskolben mit zwei Dichtungen vorgesehen werden, wobei der Raum zwischen den beiden Dichtringen mit einer Druckmittelsenke in Verbindung stehen muß.

Die erfindungsgemäße Fahrzeugbremsanlage kann pneumatisch, hydraulisch oder auch elektrisch steuerbar sein.

Wird die erfindungsgemäße Fahrzeugbremsanlage zumindest teilweise elektrisch steuerbar ausgebildet, wie in Unteransprüchen dieser Patentanmeldung angegeben ist, so muß der Mehrkreis-Bremswertgeber wenigstens eine elektrische Einrichtung, wie z. B. ein Potentiometer, und wenigstens einen elektrischen Steuerausgang aufweisen, wobei der elektrische Steuerausgang des Mehrkreis-Bremswertgebers dann mit einem elektrischen Steuereingang einer wenigstens einem Bremszylinder zugeordneten elektrisch steuerbaren Steuerventileinrichtung zu verbinden ist.

Als elektrisches Steuersignal zum Steuern des Bremsdruckes kann z. B. ein von der Stellung des Betätigungsgliedes (Pedals) des Mehrkreis-Bremswertgebers abhängiges elektrisches Signal dienen.

Die Steuerventileinrichtung kann dann als elektrische Steuermittel z. B. ein der Steuerkammer Zugeordnetes Proportional-Magnetventil aufweisen. Es ist natürlich auch möglich, die Steuerventileinrichtung oder auch die Steuerventileinrichtungen als einen von elektrischen Steuersignalen des Mehrkreis-Bremswertgebers ansteuerbaren Druckmodulator bzw. ansteuerbare Druckmodulatoren auszubilden.

Gemäß dem Ausführungsbeispiel für die beanspruchte Erfindung ist der Mehrkreis-Bremswertgeber als Motorwagen-Bremsventil für ein Motorfahrzeug ausgebildet, wobei von diesem Motorwagen-Bremsventil ein einem ersten Bremskreis (Hinterachsbremskreis) zugeordnetes pneumatisches Steuersignal und ein einem zweiten Bremskreis (Vorderachsbremskreis) zugeordnetes pneumatisches Steuersignal erzeugt werden. Die drei Steuerventileinrichtungen sind gemäß dem Ausführungsbeispiel für die beanspruchte Erfindung als pneumatisch steuerbare Steuerventileinrichtungen ausgebildet.

Die Anwendung der Erfindung soll selbstverständlich nicht auf die Bremsen an der Vorderachse eines Fahrzeugs beschränkt sein. Die Erfindung kann ebenso Anwendung finden an den Bremsen der Hinterachse oder an den Bremsen zusätzlicher Achsen des Fahrzeugs.

## Patentansprüche

1. Druckmittelbetätigte Fahrzeugbremsanlage mit wenigstens einem ersten Bremskreis (I) und einem zweiten Bremskreis (II) mit folgenden Merkmalen:
a) dem ersten Bremskreis (I) ist wenigstens ein Bremszylinder (2, 4) zugeordnet, der über eine erste Steuerventileinrichtung (7) in Abhängigkeit von einem dem ersten Bremskreis (I) zugeordneten Steuersignal eines Mehrkreis-Bremswertgebers (41) mit einer Druckmittelquelle (44) für den ersten Bremskreis (I) oder mit einer Druckmittelsenke verbindbar ist;
b) dem zweiten Bremskreis (II) sind ein erster Bremszylinder (33) und ein zweiter Bremszylinder (30) zugeordnet, die über eine zweite Steuerventileinrichtung (27) in Abhängigkeit von einem dem zweiten Bremskreis (II) zugeordneten Steuersignal des Mehrkreis-Bremswertgebers (41) mit einer zweiten Druckmittelquelle (43) für den zweiten Bremskreis (II) oder mit einer Druckmittelsenke verbindbar sind;
c) die zweite Steuerventileinrichtung (27) weist einen mit der Druckmittelquelle (43) für den zweiten Bremskreis (II) verbundenen Druckmitteleingang (26) und einen mit dem ersten Bremszylinder (33) und dem zweiten Bremszylinder (30) verbundenen Druckmittelausgang (28) auf, dadurch gekennzeichnet, daß eine zusätzliche Steuerventileinrichtung (22) vorgesehen ist, die zwischen dem Druckmittelausgang (28) der zweiten Steuerventileinrichtung (27) und dem ersten Bremszylinder (33) angeordnet ist, und über die der erste Bremszylinder (33) in Abhängigkeit von einem einem anderen Bremskreis zugeordneten Steuersignal mit einer von der Druckmittelquelle (43) des zweiten Bremskreises (II) unabhängigen Druckmittelquelle (45) oder mit dem Druckmittelausgang (28) der zweiten Steuerventileinrichtung (27) verbindbar ist.

2. Druckmittelbetätigte Fahrzeugbremsanlage nach Anspruch 1, dadurch gekennzeichnet, daß als ein einem anderen Bremskreis zugeordnetes Steuersignal für die zusätzliche Steuerventileinrichtung (22) das dem ersten Bremskreis (I) zugeordnete Steuersignal dient.

3. Druckmittelbetätigte Fahrzeugbremsanlage nach Anspruch 1, dadurch gekennzeichnet, daß als von der Druckmittelquelle (43) des zweiten Bremskreises (II) unabhängige Druckmittelquelle die Druckmittelquelle (45) für einen dritten Bremskreis (III) dient.

4. Druckmittelbetätigte Fahrzeugbremsanlage nach Anspruch 1, dadurch gekennzeichnet, daß als von der Druckmittelquelle (43) des zweiten Bremskreises (II) unabhängige Druckmittelquelle die Druckmittelquelle (44) für den ersten Bremskreis (I) dient.

5. Druckmittelbetätigte Fahrzeugbremsanlage nach Anspruch 1, dadurch gekennzeichnet, daß sowohl das dem ersten Bremskreis (I) zugeordnete Steuersignal als auch das dem zweiten Bremskreis (II) zugeordnete Steuersignal ein pneumatisches Steuersignal ist.

6. Druckmittelbetätigte Fahrzeugbremsanlage nach Anspruch 1, dadurch gekennzeichnet, daß sowohl das dem ersten Bremskreis (I) zugeordnete Steuersignal als auch das dem zweiten Bremskreis (II) zugeordnete Steuersignal ein elektrisches Steuersignal ist.

7. Druckmittelbetätigte Fahrzeugbremsanlage nach wenigstens einem der vorhergehenden Ansprüche, gekennzeichnet durch die folgenden Merkmale:
a) der Mehrkreis-Bremswertgeber (41) ist als Motorwagen-Bremsventil mit einem ersten Druckmitteleingang (39), einem zweiten Druckmitteleingang (40), einem dem ersten Druckmitteleingang (39) zugeordneten ersten Druckmittelausgang (37) und einem den zweiten Druckmitteleingang (40) zugeordneten zweiten Druckmittelausgang (38) ausgebildet;
b) der erste Druckmitteleingang (39) ist mit der Druckmittelquelle (44) für den ersten Bremskreis (I) verbunden und der zweite Druckmitteleingang (40) ist mit der Druckmittelquelle (43) für den zweiten Bremskreis (II) verbunden;
c) die erste Steuerventileinrichtung (7), die zweite Steuerventileinrichtung (27) und die zusätzliche Steuerventileinrichtung (22) sind als pneumatisch steuerbare Steuerventileinrichtungen ausgebildet, wobei jede Steuerventileinrichtung (7, 27, 22) je einen pneumatischen Steuereingang (25, 17) aufweist;
d) der dem zweiten Bremskreis (II) zugeordnete zweite Druckmittelausgang (38) des Motorwagen-Bremsventils (41) ist mit dem Steuereingang (25) der zweiten Steuerventileinrichtung (27) verbunden und der dem ersten Bremskreis (I) zugeordnete erste Druckmittelausgang (37) des Motorwagen-Bremsventils (41) ist mit dem Steuereingang (17) der zusätzlichen Steuerventileinrichtung (22) verbunden.

8. Druckmittelbetätigte Fahrzeugbremsanlage nach wenigstens einem der vorhergehenden Ansprüche, gekennzeichnet durch die folgenden Merkmale:
a) die zusätzliche Steuerventileinrichtung (22) weist eine Druckmitteleingangskammer (73), eine Druckmittelausgangskammer (59), einen über ein Auslaßventil (60, 62) der zusätzlichen Steuerventileinrichtung (22) mit der Druckmittelausgangskammer (59) verbindbaren Druckmittelauslaß (20) und eine von einem Steuerkolben (55, 77) begrenzte Steuerkammer (75) auf;
b) die Druckmitteleingangskammer (73) der zusätzlichen Steuerventileinrichtung (22) ist mit einer Druckmittelquelle (45), die von der Druckmittelquelle (43) für den zweiten Bremskreis (II) unabhängig ist, verbunden, wobei zwischen der Druckmitteleingangskammer (73) und der von der Druckmittelquelle (43) für den zweiten Bremskreis (II) unabhängigen Druckmittelquelle (45) Mittel (19) zum Absichern der beiden Druckmittelquellen (43) und (45) gegeneinander angeordnet sind;
c) die Druckmittelausgangskammer (59) der zusätzlichen Steuerventileinrichtung (22) ist mit dem dem zweiten Bremskreis (II) zugeordneten ersten Bremszylinder (33) verbunden;
d) der Druckmittelauslaß (20) der zusätzlichen Steuerventileinrichtung (22) ist mit dem Druckmittelausgang (28) der zweiten Steuerventileinrichtung (27) verbunden;
e) die Steuerkammer (75) der zusätzlichen Steuerventileinrichtung (22) ist über den Mehrkreis-Bremswertgeber (41) oder über eine der Steuerkammer (75) vorgeschaltete Elektromagnet-Ventileinrichtung mit der Druckmittelquelle (44) für den ersten Bremskreis (I) verbindbar;
f) die zweite Steuerventileinrichtung (27) weist eine mit einem Druckmitteleingang (26) verbundene Druckmitteleingangskammer, eine mit dem Druckmittelausgang (28) verbundene Druckmittelausgangskammer und eine von einem Steuerkolben begrenzte Steuerkammer sowie eine vom Steuerkolben betätigbare Einlaß- und Auslaßventileinrichtung auf, über welche die Druckmittelausgangskammer in Abhängigkeit von der Stellung des Steuerkolbens mit der Druckmitteleingangskammer oder mit einer Druckmittelsenke verbindbar oder gegen beide absperrbar ist;
g) der Druckmitteleingang (26) der zweiten Steuerventileinrichtung (27) ist mit der Druckmittelquelle (43) für den zweiten Bremskreis (II) verbunden;
h) der Druckmittelausgang (28) der zweiten Steuerventileinrichtung (27) ist mit dem dem zweiten Bremskreis (II) zugeordneten zweiten Bremszylinder (30) und mit dem Druckmittelauslaß (20) der zusätzlichen Steuerventileinrichtung (22) verbunden;
i) die Steuerkammer der zweiten Steuerventileinrichtung (27) ist über den Mehrkreis-Bremswertgeber (41) oder über eine von einem elektrischen Steuersignal des Mehrkreis-Bremswertgebers (41) ansteuerbare, der Steuerkammer vorgeschaltete Elektromagnet-Ventileinrichtung mit der Druckmittelquelle (43) für den zweiten Bremskreis (II) verbindbar.

9. Druckmittelbetätigte Fahrzeugbremsanlage nach wenigstens einem der vorhergehenden Ansprüche, gekennzeichnet durch die folgenden Merkmale:
a) die zusätzliche Steuerventileinrichtung (22) weist die mit einem Druckmitteleingang (18) verbundene Druckmitteleingangskammer (73), die mit einem Druckmittelausgang (21) verbundene Druckmittelausgangskammer (59), die von einem Steuerkolben (77, 55) begrenzte, mit einem Steuereingang (17) verbundene Steuerkammer (75) und einen Druckmittelauslaß (20) auf;
b) der Druckmitteleingang (18) der zusätzlichen Steuerventileinrichtung (22) ist mit einem Druckmittel-Vorratsbehälter (45), der vom zweiten Bremskreis (II) unabhängig ist, verbunden, die Druckmittelausgangskammer (59) ist über das Auslaßventil (62, 60) einer Einlaß- und Auslaßventileinrichtung (60, 61, 62) der zusätzlichen Steuerventileinrichtung (22) wahlweise mit der Druckmitteleingangskammer (73) oder mit einem Druckmittelausgang (28) der zweiten Steuerventileinrichtung (27) verbindbar, die Steuerkammer (75) ist über den Mehrkreis-Bremswertgeber (41) mit dem Druckmittel-Vorratsbehälter (44) des er sten Bremskreises (I) verbindbar und der Druckmittelausgang (21) ist mit dem ersten Bremszylinder (33) der Vorderachse (32) des Fahrzeugs verbunden;
c) ein Druckmitteleingang (26) der zweiten Steuerventileinrichtung (27) ist mit dem Druckmittel-Vorratsbehälter (43) des zweiten Bremskreises (II) verbunden und ein Steuereingang (25) der zweiten Steuerventileinrichtung (27) ist über den Mehrkreis-Bremswertgeber (41) mit dem Druckmittel-Vorratsbehälter (43) des zweiten Bremskreises (II) verbindbar.

10. Druckmittelbetätigte Fahrzeugbremsanlage nach wenigstens einem der vorhergehenden Ansprüche, dadurch gekennzeichnet, daß die vom Steuerdruck in der Steuerkammer (75) be aufschlagte Wirkfläche des Relaiskolbens (77, 55) gleich oder kleiner ist als die vom Druck in der Druckmittelausgangskammer (59) entgegengerichtet beaufschlagte Wirkfläche des Relaiskolbens (77, 55).

11. Druckmittelbetätigte Fahrzeugbremsanlage nach wenigstens einem der vorhergehenden Ansprüche, dadurch gekennzeichnet, daß der Relaiskolben als Stufenkolben ausgebildet ist.

12. Druckmittelbetätigte Fahrzeugbremsanlage nach wenigstens einem der vorhergehenden Ansprüche, dadurch gekennzeichnet, daß ein erster Relaiskolben (55) und ein zweiter Relaiskolben (77) koaxial zueinander und hinter einanderliegend im Gehäuse (53) der zusätzlichen Steuerventileinrichtung (22) angeordnet sind, wobei der erste Relaiskolben (55) mit seiner dem zweiten Relaiskolben (77) abgewandten Seite die Druckmittelausgangskammer (59) und der zweite Relaiskolben (77) mit seiner dem ersten Relaiskolben (55) abgewandten Seite die Steuerkammer (75) begrenzt, wobei die beiden Relaiskolben (55, 77) so ausgebildet und so zueinander angeordnet sind, daß bei einer Bewegung des ersten Relaiskolbens (55) in Richtung von der Druckmittelausgangskammer (59) weg der zweite Relaiskolben (77) in der gleichen Richtung vom ersten Relaiskolben (55) mitgenommen wird und bei einer Bewegung des zweiten Relaiskolbens (77) in Richtung von der Steuerkammer (75) weg der erste Relaiskolben (55) in der gleichen Richtung vom zweiten Relaiskolben (77) mit genommen wird.

## Claims

1. Pressure-medium-actuated vehicle braking system having at least a first brake circuit (I) and a second brake circuit (II), having the following features:
a) associated with the first brake circuit (I) is at least one brake cylinder (2, 4) that can be connected to a pressure medium source (44) for the first brake circuit (I) or to a pressure medium sink by way of a first control valve arrangement (7) in dependence upon a control signal, associated with the first brake circuit (I), of a multiple-circuit brake value transmitter (41);
b) associated with the second brake circuit (II) are a first brake cylinder (33) and a second brake cylinder (30) that can be connected to a second pressure medium source (43) for the second brake circuit (II) or to a pressure medium sink by way of a second control valve arrangement (27) in dependence upon a control signal, associated with the second brake circuit (II), of the multiple-circuit brake value transmitter (41);
c) the second control valve arrangement (27) has a pressure medium inlet (26) that is connected to the pressure medium source (43) for the second brake circuit (II) and a pressure medium output (28) that is connected to the first brake cylinder (33) and to the second brake cylinder (30), characterised in that an additional control valve arrangement (22) is provided which is arranged between the pressure medium output (28) of the second control valve arrangement (27) and the first brake cylinder (33) and by means of which the first brake cylinder (33) can be connected to a pressure medium source (45) that is independent of the pressure medium source (43) of the second brake circuit (II) or to the pressure medium output (28) of the second control valve arrangement (27) in dependence upon a control signal associated with a different brake circuit.

2. Pressure-medium-actuated vehicle braking system according to claim 1, characterised in that the control signal associated with the first brake circuit (I) serves as control signal, associated with a different brake circuit, for the additional control valve arrangement (22).

3. Pressure-medium-actuated vehicle braking system according to claim 1, characterised in that the pressure medium source (45) for a third brake circuit (III) serves as pressure medium source that is independent of the pressure medium source (43) of the second brake circuit (II).

4. Pressure-medium-actuated vehicle braking system according to claim 1, characterised in that the pressure medium source (44) for the first brake circuit (I) serves as pressure medium source that is independent of the pressure medium source (43) of the second brake circuit (II).

5. Pressure-medium-actuated vehicle braking system according to claim 1, characterised in that both the control signal associated with the first brake circuit (I) and the control signal associated with the second brake circuit (II) are pneumatic control signals.

6. Pressure-medium-actuated vehicle braking system according to claim 1, characterised in that both the control signal associated with the first brake circuit (I) and the control signal associated with the second brake circuit (II) are electrical control signals.

7. Pressure-medium-actuated vehicle braking system according to at least one of the preceding claims, characterised by the following features:
a) the multiple-circuit brake value transmitter (41) is in the form of a driver's control valve having a first pressure medium inlet (39), a second pressure medium inlet (40), a first pressure medium output (37) that is associated with the first pressure medium inlet (39) and a second pressure medium output (38) that is associated with the second pressure medium inlet (40);
b) the first pressure medium inlet (39) is connected to the pressure medium source (44) for the first brake circuit (I) and the second pressure medium inlet (40) is connected to the pressure medium source (43) for the second brake circuit (II);
c) the first control valve arrangement (7), the second control valve arrangement (27) and the additional control valve arrangement (22) are in the form of pneumatically controllable control valve arrangements, each control valve arrangement (7, 27, 22) having a pneumatic control inlet (25, 17);
d) the second pressure medium output (38), associated with the second brake circuit (II), of the driver's control valve (41) is connected to the control inlet (25) of the second control valve arrangement (27) and the first pressure medium output (37), associated with the first brake circuit (I), of the drivers control valve (41) is connected to the control inlet (17) of the additional control valve arrangement (22).

8. Pressure-medium-actuated vehicle braking system according to at least one of the preceding claims, characterised by the following features:
a) the additional control valve arrangement (22) has a pressure medium inlet chamber (73), a pressure medium output chamber (59), a pressure medium outlet (20) that can be connected to the pressure medium output chamber (59) by way of an outlet valve (60, 62) of the additional control valve arrangement (22), and a control chamber (75) that is bounded by a control piston (55, 77);
b) the pressure medium inlet chamber (73) of the additional control valve arrangement (22) is connected to a pressure medium source (45) that is independent of the pressure medium source (43) for the second brake circuit (II), there being arranged between the pressure medium inlet chamber (73) and the pressure medium source (45) that is independent of the pressure medium source (43) for the second brake circuit (II) means (19) for safeguarding the two pressure medium sources (43) and (45) from one another;
c) the pressure medium output chamber (59) of the additional control valve arrangement (22) is connected to the first brake cylinder (33) that is associated with the second brake circuit (II);
d) the pressure medium outlet (20) of the additional control valve arrangement (22) is connected to the pressure medium output (28) of the second control valve arrangement (27);
e) the control chamber (75) of the additional control valve arrangement (22) can be connected to the pressure medium source (44) for the first brake circuit (I) by way of the multiple-circuit brake value transmitter (41) or by way of an electromagnetic valve arrangement connected upstream of the control chamber (75);
f) the second control valve arrangement (27) has a pressure medium inlet chamber that is connected to a pressure medium inlet (26), a pressure medium output chamber that is connected to the pressure medium output (28) and a control chamber that is bounded by a control piston and also an inlet and outlet valve arrangement that can be actuated by the control piston, by means of which inlet and outlet valve arrangement the pressure medium output chamber can be connected to, or closed off from, the pressure medium inlet chamber or a pressure medium sink in dependence upon the position of the control piston;
g) the pressure medium inlet (26) of the second control valve arrangement (27) is connected to the pressure medium source (43) for the second brake circuit (II);
h) the pressure medium output (28) of the second control valve arrangement (27) is connected to the second brake cylinder (30) that is associated with the second brake circuit (II) and to the pressure medium outlet (20) of the additional control valve arrangement (22);
i) the control chamber of the second control valve arrangement (27) can be connected to the pressure medium source (43) for the second brake circuit (II) by way of the multiple-circuit brake value transmitter (41) or by way of an electromagnetic valve arrangement that is connected upstream of the control chamber and can be actuated by an electrical control signal of the multiple-circuit brake value transmitter (41).

9. Pressure-medium-actuated vehicle braking system according to at least one of the preceding claims, characterised by the following features:
a) the additional control valve arrangement (22) comprises the pressure medium inlet chamber (73) which is connected to a pressure medium inlet (18), the pressure medium output chamber (59) which is connected to a pressure medium output (21), the control chamber (75) that is bounded by a control piston (77, 55) and connected to a control inlet (17), and a pressure medium outlet (20);
b) the pressure medium inlet (18) of the additional control valve arrangement (22) is connected to a pressure medium supply container (45) that is independent of the second brake circuit (II), the pressure medium output chamber (59) can be connected by way of the outlet valve (62, 60) of an inlet and outlet valve arrangement (60, 61, 62) of the additional control valve arrangement (22) to either the pressure medium inlet chamber (73) or a pressure medium output (28) of the second control valve arrangement (27), the control chamber (75) can be connected to the pressure medium supply container (44) of the first brake circuit (I) by way of the multiple-circuit brake value transmitter (41) and the pressure medium output (21) is connected to the first brake cylinder (33) of the front axle (32) of the vehicle;
c) a pressure medium inlet (26) of the second control valve arrangement (27) is connected to the pressure medium supply container (43) of the second brake circuit (II) and a control inlet (25) of the second control valve arrangement (27) can be connected to the pressure medium supply container (43) of the second brake circuit (II) by way of the multiple-circuit brake value transmitter (41).

10. Pressure-medium-actuated vehicle braking system according to at least one of the preceding claims, characterised in that the effective area of the relay piston (77, 55) which is acted upon by the control pressure in the control chamber (75) is of the same size as or smaller than the effective area of the relay piston (77, 59) which is acted upon in the opposite direction by the pressure in the pressure medium output chamber (59).

11. Pressure-medium-actuated vehicle braking system according to at least one of the preceding claims, characterised in that the relay piston is in the form of a stepped piston.

12. Pressure-medium-actuated vehicle braking system according to at least one of the preceding claims, characterised in that a first relay piston (55) and a second relay piston (77) are arranged coaxially with one another and in succession in the housing (53) of the additional control valve arrangement (22), the first relay piston (55) bounding the pressure medium output chamber (59) by its side that is remote from the second relay piston (77) and the second relay piston (77) bounding the control chamber (75) by its side that is remote from the first relay piston (55) the two relay pistons (55, 77) being so constructed and so arranged relative to one another that in the event of movement of the first relay piston (55) away from the pressure medium output chamber (59) the second relay piston (77) is moved in the same direction by the first relay piston (55) and in the event of movement of the second relay piston (77) away from the control chamber (75) the first relay piston (55) is moved in the same direction by the second relay piston (77).

## Revendications

1. Installation de freinage pour véhicule comportant au moins un premier circuit de freinage (I) et un second circuit de freinage (II) présentant les caractéristiques suivantes :
a) au premier circuit de freinage (I) est associé au moins un cylindre de frein (2, 4) qui est susceptible d'être relié via une première soupape de commande (7), en fonction d'un signal de commande, associé au premier circuit de freinage (I), d'un générateur de valeurs de freinage à circuits multiples (41), avec une source de fluide sous pression (44) pour le premier circuit de freinage (I) ou avec un puits de fluide sous pression ;
b) au second circuit de freinage (II) sont associés un premier cylindre de frein (33) et un second cylindre de frein (30) qui sont susceptibles d'être reliés via une seconde soupape de commande (27), en fonction d'un signal de commande, associé au second circuit de freinage (II), du générateur de valeurs de freinage à circuits multiples (41), avec une seconde source de fluide sous pression (43) pour le second circuit de freinage (II) ou avec un puits de fluide sous pression ;
c) la seconde soupape de commande (27) présente une entrée de fluide sous pression (26) reliée à la source de fluide sous pression (43) pour le second circuit de freinage (II) et une sortie de fluide sous pression (28) reliée au premier cylindre de frein (33) et au second cylindre de frein (30),
caractérisée en ce qu'il est prévu une soupape de commande (22) supplémentaire qui est agencée entre la sortie de fluide sous pression (28) de la seconde soupape de commande (27) et le premier cylindre de frein (33), et via laquelle le premier cylindre de frein (33) est susceptible d'être relié en fonction d'un signal de commande associé à un autre circuit de freinage, avec une source de fluide sous pression (45) indépendante de la source de fluide sous pression (43) du second circuit de freinage (II) ou avec la sortie de fluide sous pression (28) de la seconde soupape de commande (27).

2. Installation de freinage de véhicule actionnée par fluide sous pression selon la revendication 1, caractérisée en ce que le signal de commande associé au premier circuit de freinage (I) sert de signal de commande associé à un autre circuit de freinage pour la soupape de commande (22) supplémentaire.

3. Installation de freinage de véhicule actionnée par fluide sous pression selon la revendication 1, caractérisée en ce que la source de fluide sous pression (45) destinée à un troisième circuit de freinage (III) sert de source de fluide sous pression indépendante de la source (43) du second circuit de freinage (II).

4. Installation de freinage de véhicule actionnée par fluide sous pression selon la revendication 1, caractérisée en ce que la source (44) destinée au premier circuit de freinage (I) sert de source indépendante de la source (43) du second circuit de freinage (II).

5. Installation de freinage de véhicule actionnée par fluide sous pression selon la revendication 1, caractérisée en ce que tant le signal de commande associé au premier circuit de freinage (I) que le signal de commande associé au second circuit de freinage (II) est un signal de commande pneumatique.

6. Installation de freinage de véhicule actionnée par fluide sous pression selon la revendication 1, caractérisée en ce que tant le signal de commande associé au premier circuit de freinage (I) que le signal de commande associé au second circuit de freinage (II) est un signal de commande électrique.

7. Installation de freinage de véhicule actionnée par fluide sous pression selon l'une au moins des revendications précédentes, caractérisée en ce que :
a) le générateur de valeurs de freinage à circuits multiples (41) est réalisé sous forme de robinet de freinage automobile, comportant une première entrée (39) de fluide sous pression, une seconde entrée (40) de fluide sous pression, une première sortie (37) associée à la première entrée (39) et une seconde sortie (38) associée à la seconde entrée (40) ;
b) la première entrée (39) est reliée à la source de fluide sous pression (44) pour le premier circuit de freinage (I) et la seconde entrée (40) est reliée à la source de fluide sous pression (43) pour le second circuit de freinage (II) ;
c) la première soupape de commande (7), la seconde soupape de commande (27) et la soupape de commande (22) supplémentaire sont réalisées sous forme de soupapes de commande à commande pneumatique, les soupapes de commande (7, 27, 22) présentant chacune une entrée de commande pneumatique (25, 17) ;
d) la seconde sortie (38) associée au second circuit de freinage (II) du robinet de freinage (41) est reliée à l'entrée de commande (25) de la seconde soupape de commande (27) et la première sortie (37) du robinet de freinage (41), associée au premier circuit de freinage (I) est reliée à l'entrée de commande (17) de la soupape de commande (22) supplémentaire.

8. Installation de freinage de véhicule actionnée par fluide sous pression selon l'une au moins des revendications précédentes, caractérisée en ce que :
a) la soupape de commande (22) supplémentaire présente une chambre d'entrée (73), une chambre de sortie (59), un échappement (20) susceptible d'être relié à la chambre de sortie via une soupape d'échappement (60, 62) de la soupape de commande (22) supplémentaire et une chambre de commande (75) délimitée par un piston de commande (55, 77) ;
b) la chambre d'entrée (73) de la soupape de commande (22) supplémentaire est reliée à une source de fluide sous pression (45) qui est indépendante de la source (43) pour le second circuit de freinage (II), des moyens (19) servant à isoler les deux sources (43) et (45) l'une par rapport à l'autres étant agencés entre la chambre d'entrée (73) et la source (45) indépendante de la source (43) pour le second circuit de freinage (II) ;
c) la chambre de sortie (59) de la soupape de commande (22) supplémentaire est reliée au premier cylindre de frein (33) associé au second circuit de freinage (II) ;
d) l'échappement (20) de la soupape de commande (22) supplémentaire est relié à la sortie (28) de la seconde soupape de commande (27) ;
e) la chambre de commande (75) de la soupape de commande (22) supplémentaire est susceptible d'être reliée à la source (44) pour le premier circuit de freinage (I) via le générateur de valeurs de freinage à circuits multiples (41) ou via une soupape électromagnétique branchée en amont de la chambre de commande (75) ;
f) la seconde soupape de commande (27) présente une chambre d'entrée reliée à l'entrée (26), une chambre de sortie reliée à la sortie (28) et une chambre de commande délimitée par un piston de commande ainsi qu'une soupape d'admission et d'échappement actionnable par le piston de commande, via laquelle la chambre de sortie, en fonction de la position du piston de commande, est susceptible d'être reliée à la chambre d'entrée ou à un puits ou bien d'être isolée vis-à-vis des deux ;
g) l'entrée (26) de la seconde soupape de commande (27) est reliée à la source (43) pour le second circuit de freinage (II) ;
h) la sortie (28) de la seconde soupape de commande (27) est reliée au second cylindre de frein (30) associé au second circuit de freinage (II) et à l'échappement (20) de la soupape de commande (22) supplémentaire ;
i) la chambre de commande de la seconde soupape de commande (27) est susceptible d'être reliée à la source (43) pour le second circuit de freinage (II) via le générateur de valeurs de freinage à circuits multiples (41) ou via une soupape électromagnétique branchée en amont de la chambre de commande, susceptible d'être pilotée par un signal de commande électrique du générateur de valeurs de freinage à circuits multiples (41).

9. Installation de freinage de véhicule actionnée par fluide sous pression selon l'une au moins des revendications précédentes, caractérisée en ce que :
a) la soupape de commande (22) supplémentaire présente la chambre d'entrée (73) reliée à une entrée (18), la chambre de sortie (59) reliée à la sortie (21), la chambre de commande (75) délimitée par un piston (77, 55) et reliée à une entrée de commande (17), et une sortie (20) ;
b) l'entrée (18) de la soupape de commande (22) supplémentaire est reliée à un réservoir (45) de fluide sous pression qui est indépendant du second circuit de freinage (II), la chambre de sortie (59) est reliée via la soupape d'échappement (62, 60) d'une soupape d'admission et d'échappement (60, 61, 62) de la soupape de commande (22) supplémentaire, sélectivement avec la chambre d'entrée (73) ou avec une sortie (28) de la seconde soupape de commande (27), la chambre de commande (75) est reliée via le générateur de valeurs de freinage à circuits multiples (41) avec le réservoir (44) du premier circuit de freinage (I), et la sortie (21) est reliée au premier cylindre de frein (33) de l'essieu avant (32) du véhicule ;
c) une entrée (26) de la seconde soupape de commande (27) est reliée au réservoir (43) du second circuit de freinage (II), et une entrée de commande (25) de la seconde soupape de commande (27) est susceptible d'être reliée au réservoir (43) du second circuit de freinage (II) via le générateur de valeurs de freinage à circuits multiples (41).

10. Installation de freinage de véhicule actionnée par fluide sous pression selon l'une au moins des revendications précédentes, caractérisée en ce que la surface active du piston de relais (77, 55) sollicitée par la pression de commande dans la chambre de commande (75) est égale ou inférieure à la surface active du piston de relais (77, 59) sollicitée en sens inverse par la pression dans la chambre de sortie (59).

11. Installation de freinage de véhicule actionnée par fluide sous pression selon l'une au moins des revendications précédentes, caractérisée en ce que le piston de relais est réalisé sous forme de piston à gradins.

12. Installation de freinage de véhicule actionnée par fluide sous pression selon l'une au moins des revendications précédentes, caractérisée en ce qu'un premier piston de relais (55) et un second piston de relais (77) sont agences coaxialement l'un par rapport à l'autre et l'un derrière l'autre dans le boîtier (53) de la soupape de commande (22) supplémentaire, le premier piston de relais (55) délimitant avec son côté détourné du second piston de relais (77) la chambre de sortie (59), et le second piston de relais (77) délimitant avec son côté détourné du premier piston de relais (55) la chambre de commande (75), les deux pistons de relais (55, 77) étant réalisés et agencés l'un par rapport à l'autre de telle manière que lors d'un mouvement du premier piston de relais (55) en direction d'éloignement de la chambre de sortie (59), le second piston de relais (77) est entraîné dans la même direction par le premier piston de relais (55) et lors d'un mouvement du second piston de relais (77) en direction d'éloignement de la chambre de commande (59), le premier piston de relais (55) est entraîné dans la même direction par le second piston de relais (77).
